# EUROPÄISCHE PATENTSCHRIFT

(11) **EP 0 938 174 B1**
(45) Veröffentlichungstag und Bekanntmachung des Hinweises auf die Patenterteilung: **17.04.2002**
(21) Anmeldenummer: 99100526.5
(22) Anmeldetag: 13.01.1999
(51) Int. Cl.: H02B 1/20

(54) **Sammelschienenblock**
Bus bar assembly
Ensemble de barres de distribution

(30) Priorität: 04.02.1998 DE 19804274
(43) Veröffentlichungstag der Anmeldung: 25.08.1999
(73) Patentinhaber: Friedrich Göhringer GmbH, 78098 Triberg (DE)
(72) Erfinder: Spross, Lutz, Dr., 09661 Striegistal (DE)
(74) Vertreter: Patentanwälte Westphal, Mussgnug & Partner

(56) Entgegenhaltungen:
- EP-A1- 0 616 402
- DE-A1- 3 312 478
- DE-U1- 8 700 153

## Beschreibung

Die vorliegende Erfindung betrifft einen Sammelschienenblock zur phasenweisen Verbindung gleichphasiger Schaltpole von Schaltgeräten, mit einem Isolierprofil, das mehrere parallel zueinander angeordnete U-förmige Kammern aufweist zur entsprechenden Aufnahme von Sammelschienen, deren Anschlußlaschen aus dem Isolierprofil herausragen und an Schaltpole anschließbar sind, wobei Trennwände des Isolierprofils derart ausgebildet sind, daß sie die Sammelschienen auf Abstand halten.

Allgemein werden Sammelschienenblöcke verwandt zur phasenweisen Verbindung gleichphasiger Schaltpole beispielsweise von Schaltgeräten in einer elektrischen Installationsverteilung.

So beschreibt zum Beispiel die AT 374 059 einen Sammelschienenblock, bei welchem die einzelnen Kammern gemeinsam mit einem Deckel verschließbar sind, der an einer Längskante des Sammelschienenblocks verschwenkbar angeschlossen ist. Dabei sind die Anschlussfahnen der Sammelschienen in einer dem Anschlussbereich des Deckels entgegengesetzten Richtung abgewinkelt und treten bei an dem freien Ende des Deckels angeordneten Ausklinkungen aus dem Sammelschienenblock heraus.

Die Fertigung dieses Sammelschienenblocks ist sehr aufwendig, da zusätzlich zu den Kammern auch noch der Deckel ausgeformt werden muss. Außerdem sind dadurch die Sammelschienen in axialer Richtung des Blockes festgelegt, so dass eine Anpassung an Toleranzen und Ungenauigkeiten im Abstand der anzuschließenden Geräte, wenn überhaupt, kaum noch möglich ist.

Ferner beschreibt die DE-PS 33 12 478 einen Sammelschienenblock, dessen Isolierprofil drei U-förmige Kammern aufweist, die sich alle in der gleichen Richtung und auf gleicher Höhe öffnen. Werden derartige Sammelschienenblöcke in Feuchtraumbereichen in der Weise montiert, daß sich die Kammern nach oben öffnen, so können sich Kondenswassertropfen auf dem Sammelschienenblock ansammeln und zu Überschlägen oder Kurzschluß zwischen den Sammelschienen und somit zwischen den Stromphasen führen.

Ein ähnlicher Sammelschienenblock ist aus der DE 81 16 426 U1 bekannt, dessen Isolierprofil drei nebeneinander sich in die gleiche Richtung öffnende U-förmige Kammern aufweist. Dabei befinden sich die Öffnungen alle auf gleicher Höhe, so dass die gleichen Nachteile, wie bei dem vorausstehend beschriebenen Sammelschienenblock auftreten. Um ein stirnseitiges Eindringen von Wasser oder Verunreinigungen zu verhindern, weist dieser Sammelschienenblock an seiner Stirnseite Isolierdeckel auf.

Demgegenüber offenbart die EP 0616402 B1 einen Sammelschienenblock der eingangs genannten Art, der die oben genannten Nachteile dadurch vermeidet, daß die mittlere Kammer sich in entgegengesetzter Richtung zu den beiden äußeren Kammern öffnet. Die mittlere Kammer weist dabei einen nach oben gerichteten dachförmigen Boden auf, so daß Kondenswassertropfen entweder in die eine oder in die andere Außenkammer ablaufen und keine Kurzschlußbrücken zwischen den Sammelschienen bilden können.

Die Fertigung eines derartigen Sammelschienenblocks ist aufwendig, da das Einstanzen der Schlitze in dem Boden der mittleren Kammer zum Durchführen der Anschlußlaschen der mittleren Sammelschiene einen zusätzlichen Arbeitsschritt erfordert. Außerdem kann die mittlere Sammelschiene bei der Fertigungsmontage nicht in Längsrichtung in das Isolierprofil eingeschoben werden. Die mittlere Sammelschiene muß nämlich von der Rückseite in das Isolierprofil senkrecht zu dessen Längsachse eingesetzt werden.

Außerdem kann es bei der Verwendung dieses Sammelschienenblocks nachteilig sein, daß die Anschlußlaschen der mittleren Sammelschiene in den Schlitzen des Isolierprofils axial unverschiebbar festgelegt sind. Die Anpassung des Abstandes der Abschlußlaschen der Sammelschienen an Toleranzen und Ungenauigkeiten im Abstand der anzuschließenden Installationsgeräte ist dadurch zumindest erschwert und in Extremfällen überhaupt nicht möglich.

Der Erfindung liegt daher die Aufgabe zugrunde, einen Sammelschienenblock der eingangs genannten Art anzugeben, der leicht und einfach herstellbar ist und gleichzeitig eine hohe Sicherheit gegen Kurzschlußbrücken und Überschläge durch Kondensationstropfen aufweist.

Diese Aufgabe wird bei einem Sammelschienenblock der eingangs genannten Art erfindungsgemäß dadurch gelöst, daß sich alle Kammern in der gleichen Richtung öffnen und Endbereiche zumindest der die mittlere Kammer bildenden Trennwände zueinander geneigt ausgebildet sind und an der mittleren Sammelschiene oder deren Anschlußlaschen anliegen.

Ein noch besseres Abfließen von Kondensationswasser in die äußeren Kammern ist erzielbar, wenn die Endbereiche dachförmig hochgezogen zueinander geneigt ausgebildet sind.

Um ein Verrutschen der eingeführten Sammelschienen z. B. während des Transports zu vermeiden, ist es vorteilhaft, wenn die Kammern so ausgebildet sind, daß die entsprechenden Sammelschienen darin klemmbar sind. Die Klemmung läßt dabei im Bedarfsfalle auch ein einfaches Nachjustieren der Sammelschienen zu.

Die lichten Weiten der jeweiligen Kammern sind so auf die Stärken der jeweiligen Sammelschienen abgestimmt, daß diese durch Klemmwirkung in ihrer Lage gehalten werden. Vorteilhaft ist in jeder der Kammern mindestens eine an einer Trennwand ausgebildete Nockenleiste angeformt zum Verstärken der Klemmwirkung auf die eingeführten Sammelschienen bzw. deren Anschlußlaschen und zum Rasten der Sammelschienen in den Kammern.

Dabei ist es von Vorteil, wenn die in die beiden äußeren Kammern hineinragenden Nockenleisten an den inneren, die mittlere Kammer bildenden Trennwänden angeordnet sind.

Eine noch bessere Lagefixierung ist dabei erzielbar, wenn sich am unteren Abschnitt der mittleren Kammer eine Bodenkammer anschließt, deren zur mittleren Kammer weisendes Ende mit mindestens einer Nockenleiste, vorzugsweise mit zwei einander gegenüberliegenden Nockenleisten versehen ist.

Zusätzlich zu dieser Lagefixierung und der insbesondere durch die Endbereiche der mittleren Trennwände erhöhten Klemmwirkung können die Sammelschienen in den entsprechenden Kammern noch dadurch gesichert werden, daß die Sammelschienen mit Rastvorsprüngen versehen sind, die die Nockenleisten hintergreifen.

Für das Anschließen der Anschlußlaschen an die Installationsgeräte sind die Anschlußlaschen in der Regel derart gekröpft, daß sie in einer Ebene liegen.

Dabei ist es von Vorteil, wenn die gemeinsame Ebene von der mittleren Sammelschiene gebildet wird, da dadurch die äußeren Sammelschienen identisch ausgebildet werden können.

Ein Abfließen von Kondensationswasser von der Mitte des Sammelschienenblockes nach außen kann dadurch unterstützt werden, daß die Enden der Endbereiche der inneren Trennwände einen größeren Abstand zu den Bodenbereichen der Kammer aufweisen als die Enden der äußeren Trennwände.

Um die mittlere Sammelschiene sicher zu positionieren, ist es vorteilhaft, wenn die Bodenkammer die Sammelschiene unten und die Endbereiche der mittleren Trennwände die Sammelschiene im Bereich ihrer Anschlußlaschen halten. Die Rastung erfolgt im Bereich der in der Bodenkammer sitzenden Sammelschiene.

Obwohl eine Vielzahl von Materialien und auch Herstellungsverfahren für das Isolierprofil gegeben sind, ist es bevorzugt, wenn das Isolierprofil aus extrudiertem Kunststoff besteht.

Des weiteren können gemäß einer weiteren Ausführungsform der Erfindung die Stirnseiten des Isolierprofils mit Endkappen verschlossen werden. Dadurch ist insbesondere beim Ablängen eines Sammelschienenblocks ein Berührungsschutz für die Sammelschienen an den Enden gewährleistet, ohne daß die Sammelschienen zusätzlich gekürzt werden müssen.

Zum Anschließen an die Installationsgeräte können die freien Enden der Anschlußlaschen gabelförmig ausgeklinkt oder als Stifte definierter Breite ausgebildet sein.

Weitere Vorteile der Erfindung ergeben sich aus der folgenden Beschreibung einer Ausführungsform sowie aus den Zeichnungen, auf die Bezug genommen wird. Es zeigen:
- Fig. 1: einen Querschnitt durch ein Isolierprofil gemäß der vorliegenden Erfindung; und
- Fig. 2: eine schematische Darstellung des Querschnitts von Fig. 1 mit eingesetzten Sammelschienen.

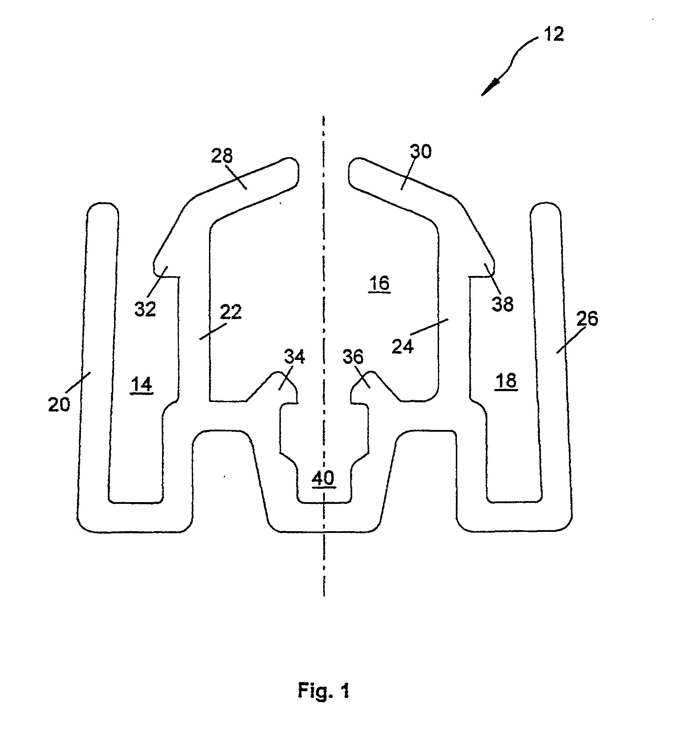

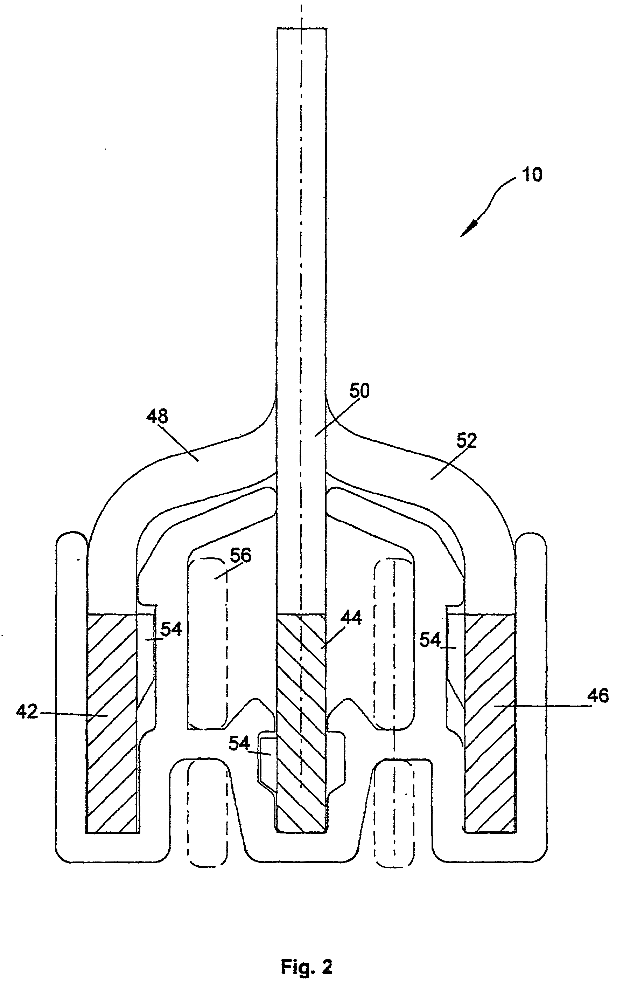

In Fig. 1 ist im Querschnitt ein Isolierprofil 12 eines Sammelschienenblocks (siehe Bezugsziffer 10 von Fig. 2) dargestellt, das erste bis dritte U-förmige Kammern 14,16 und 18 aufweist, die in der Fig. 1 nach oben geöffnet sind.

Die ersten bis dritten U-förmigen Kammern 14,16 und 18 werden von ersten bis vierten Trennwänden 20,22,24 und 26 gebildet, wobei die erste Trennwand 20 und die vierte Trennwand 26, d.h. die äußeren Trennwände 20 und 26 im wesentlichen vertikal in der Fig. 1 ausgerichtet sind. Dabei befinden sich die nicht näher bezeichneten Bodenbereiche der drei Kammern 14,16 und 18 im wesentlichen in einer Ebene.

Die zweite Trennwand 22 und die dritte Trennwand 24, d.h. die beiden inneren Trennwände 22 und 24 weisen jeweils Endbereiche 28 bzw. 30 auf, die jeweils dachförmig aufeinander zu gerichtet hochgezogen sind. Die beiden aufeinander zu gerichteten Enden der Endbereiche 28 und 30 überragen dabei die jeweiligen Enden der äußeren Trennwände 20 und 26 nach oben. Die übrigen Bereiche der inneren Trennwände 22 und 24 verlaufen im wesentlichen parallel zu den äußeren Trennwänden 20 und 26.

Aufgrund der dachförmig hochgezogenen Endbereiche 28 und 30 der inneren Trennwände 22 und 24 ist die zweite Kammer bzw. mittlere Kammer 16 deutlich größer ausgebildet als die erste Kammer 14 und die dritte Kammer 18, d.h. die beiden äußeren Kammern 14 und 18.

Im Bereich des Übergangs von dem ersten Endbereich 28 zu dem im wesentlichen senkrecht verlaufenden Teil weist die zweite Trennwand 22 eine erste Nockenleiste 32 auf, die in die erste Kammer 14 hineinragt. Die lichte Weite zwischen der ersten Nockenleiste 32 und der ersten Trennwand 20 kann dabei etwas geringer sein als die Stärke einer einführbaren ersten Sammelschiene (siehe Bezugsziffer 42 in Fig. 2), um eine Klemmwirkung auf diese erste Sammelschiene 42 nach deren Einführung ausüben zu können.

Die zweite bzw. mittlere Kammer 16 geht an ihrem der Öffnung gegenüberliegenden unteren Ende in eine Bodenkammer 40 über. An dem Übergangsbereich von der mittleren Kammer 16 zur Bodenkammer 40 bzw. an dem zur mittleren Kammer 16 weisenden Ende der Bodenkammer 40 sind zweite und dritte Nockenleisten 34 und 36 gegenüberliegend aufeinander zu gerichtet angeordnet. Diese beiden Nockenleisten 34 und 36 können auf eine zweite bzw. mittlere Sammelschiene (siehe Bezugsziffer 44 von Fig. 2) ebenfalls eine geringe Klemmwirkung ausüben, wenn diese mittlere Sammelschiene 44 eingeführt und in der Bodenkammer 40 positioniert ist.

Die zwischen der Basis der äußeren Kammern 14 und 18 und der Basis der Bodenkammer 40 angeordneten Bereiche des Isolierprofils 12 sind U-förmig ausgespart, wobei diese U-förmigen Aussparungen sich den drei U-förmigen Kammern 14, 16 und 18 entgegengesetzt öffnen.

Diese beiden Aussparungen dienen einer Materialersparnis für das Isolierprofil 12. Insbesondere aber ist die die mittlere Sammelschiene 44 aufnehmende Bodenkammer 40 mit den an den äußeren Sammelschienen 42 und 46 anliegenden inneren Trennwänden 22 und 24 nur durch horizontale Stege geringer Materialstärke verbunden, deren Elastizität ein gegenseitiges Verkanten der ersten bis dritten Sammelschienen 42, 44 und 46 zuläßt.

Spiegelbildlich zur ersten Kammer 14 weist die dritte Kammer 18 eine in die Kammer 14 weisende vierte Nockenleiste 38 auf, die ebenfalls an dem Übergang zwischen dem zweiten Endbereich 30 und dem senkrechten Teil der dritten Trennwand 24 angeordnet ist.

In der Fig. 2 ist ein Sammelschienenblock 10 mit dem bereits anhand der Fig. 1 beschriebenen Isolierprofil 12 dargestellt. In den drei in der Fig. 1 näher bezeichneten Kammern 14, 16 und 18 sind die ersten bis dritten Sammelschienen 42, 44 und 46 eingeführt. Diese drei Sammelschienen 42, 44 und 46 werden im unteren Bereich der Kammern 14 und 18 sowie der Bodenkammer 40 von den Trennwänden 20, 22, 24 und 26 und den Nockenleisten 34 und 36 geführt und positioniert gehalten. Die Sammelschienen 42, 44 und 46 weisen jeweils axial beabstandete erste bis dritte Anschlußlaschen 48, 50 und 52 auf, die durch Nockenleisten 32 und 38 sowie die Endbereiche 28 und 30 gehalten und gegebenenfalls leicht geklemmt werden.

Die Anschlußlaschen 48 und 52 der beiden äußeren Sammelschienen 42 und 46 sind derart gekröpft, daß sie sich in der gleichen Ebene befinden wie die Anschlußlaschen 50 der zweiten bzw. mittleren Sammelschiene 44. Diese gemeinsame Ebene der drei Anschlußlaschen 48, 50 und 52 verläuft in Fig. 2 im wesentlichen senkrecht.

Selbstverständlich ist es möglich, je nach Bedarf eine andere gemeinsame Ebene oder auch verschiedene Ebenen für die drei Anschlußlaschen 48, 50 und 52 zu wählen, wobei die drei Sammelschienen 42, 44 und 46 dann entsprechend gekröpft werden müssen.

Um die drei Sammelschienen 42, 44 und 46 (unabhängig von einer eventuellen Klemmwirkung) gegen ein Herausrutschen aus dem Isolierprofil 12 in der Fig. 2 senkrecht nach oben zu sichern, können die drei Sammelschienen 42, 44 und 46 jeweils mit Rastvorsprüngen 54 versehen sein, die die ersten und vierten Nockenleisten 32 und 38 und zumindest eine der zweiten und dritten Nockenleisten 34 und 36 hintergreifen.

Dabei kann die mittlere Sammelschiene 44 zwei Rastvorsprünge 54 aufweisen, die die entsprechenden Nockenleisten 34 und 36 hintergreifen. Es kann bei geeigneter Ausführung auch ausreichen, wenn die mittlere Sammelschiene 44 lediglich einen Rastvorsprung 54 aufweist, der dann je nach Einführungsorientierung der mittleren Sammelschiene 44 entweder die zweite Nockenleiste 34 oder die dritte Nockenleiste 36 hintergreift.

Um die Sammelschienen 42, 44, 46 gegen Berührung zu sichern, ohne diese an den Enden gegenüber dem Isolierprofil 12 zu kürzen, können die jeweiligen Stirnseiten durch Endkappen 56 abgedeckt werden, was in der Fig. 2 schematisch dargestellt ist. Dazu können entsprechend ausgeformte Vorsprünge der Endkappen 56 die zwischen der Bodenkammer 40 und den beiden äußeren Kammern 14 und 18 angeordneten Verbindungsstege umgreifen.

Obwohl in der Fig. 2 nicht dargestellt, können die Anschlußlaschen 48, 50 und 52 der drei Sammelschienen 42, 44 und 46 gabelförmig ausgeklinkt sein, um Schrauben zum Anschließen von Installationsgeräten aufnehmen zu können. Ebenso können die Anschlußlaschen 48, 50 und 52 stiftförmig ausgebildet sein, um in Klemmanschlüsse eingeführt werden zu können.

Erfindungsgemäß weist das Isolierprofil des Sammelschienenblocks drei Kammern auf, die sich in gleicher Richtung öffnen und in die Sammelschienen einsetzbar und vorzugsweise durch zusätzliche Rastvorsprünge rastbar sind. Dabei können die Trennwände der mittleren Kammer dachförmig hochgezogen sein, wobei sie die Kammer für die mittlere Sammelschiene weitgehend dichtend übergreifen.

Alle drei Sammelschienen können bei der Montage in Axialrichtung in das Isolierprofil eingeschoben oder von oben eingedrückt werden. Ein gegenseitiges Verschieben der Sammelschienen bei der Installation ist möglich. Die dachförmig hochgezogenen Trennwände der inneren Kammer lassen sich eventuell bildende Kondensattropfen nach links oder nach rechts abfließen, so daß keine Gefahr einer Kurzschlußbrückenbildung besteht.

## Patentansprüche

1. Sammelschienenblock (10) zur phasenweise Verbindung gleichphasiger Schaltpole von Schaltgeräten, mit einem Isolierprofil (12), das mehrere parallel zueinander angeordnete U-förmige Kammern (14,16,18) aufweist zur entsprechenden Aufnahme von Sammelschienen (42,44,46), die Anschlußlaschen (48,50,52) zum Anschließen an Schaltpole aufweisen, wobei Trennwände (20,22,24,26) des Isolierprofils (12) derart ausgebildet sind, daß sie die Sammelschienen (42,44,46) auf Abstand halten,
**dadurch gekennzeichnet, daß** sich alle Kammern (14,16,18) in der gleichen Richtung öffnen und Endbereiche (28,30) der die mittlere Kammer bildenden Trennwände (22,24) zueinander geneigt ausgebildet sind und an der mittleren Sammelschiene (44) oder deren Anschlußlaschen (50) anliegen.

2. Sammelschienenblock (10) nach Anspruch 1,
**dadurch gekennzeichnet,**
**daß** die Endbereiche (28,30) dachförmig hochgezogen zueinander geneigt ausgebildet sind.

3. Sammelschienenblock (10) nach Anspruch 1 oder 2,
**dadurch gekennzeichnet,**
**daß** die Kammern (14,16,18) so ausgebildet sind, daß die entsprechenden Sammelschienen (42,44,46) darin klemmbar sind.

4. Sammelschienenblock (10) nach mindestens einem der Ansprüche 1 bis 3,
**dadurch gekennzeichnet,**
**daß** in jede der drei Kammern (14,16,18) mindestens eine an einer Trennwand (22,24) ausgebildete Nockenleiste (32,34, 36,38) hineinragt zum Einrasten der eingefügten Sammelschienen (42,44,46).

5. Sammelschienenblock (10) nach Anspruch 4,
**dadurch gekennzeichnet,**
**daß** die in die beiden äußeren Kammern (14,18) hineinragenden Nockenleisten (32,38) an den inneren, die mittlere Kammer (16) bildenden Trennwänden (22,24) angeordnet sind.

6. Sammelschienenblock (10) nach Anspruch 4 oder 5,
**dadurch gekennzeichnet,**
**daß** der untere Abschnitt der mittleren Kammer (16) eine Bodenkammer (40) bildet, deren zur mittleren Kammer (16) weisendes Ende mit mindestens einer Nockenleiste (34,36) versehen ist.

7. Sammelschienenblock (10) nach Anspruch 6,
**dadurch gekennzeichnet,**
**daß** das zur mittleren Kammer (16) weisende Ende der Bodenkammer (40) zwei einander gegenüberliegende Nockenleisten (34,36) aufweist.

8. Sammelschienenblock (10) nach mindestens einem der Ansprüche 4 bis 7,
**dadurch gekennzeichnet,**
**daß** die Sammelschienen (42,44,46) mit Rastvorsprüngen (54) versehen sind, die die Nockenleisten (32,34,36,38) hintergreifen.

9. Sammelschienenblock (10) nach mindestens einem der Ansprüche 1 bis 8,
**dadurch gekennzeichnet,**
**daß** die Anschlußlaschen (48,50,52) derart gekröpft sind, daß sie in einer Ebene liegen.

10. Sammelschienenblock (10) nach Anspruch 9,
**dadurch gekennzeichnet,**
**daß** die gemeinsame Ebene von der mittleren Sammelschiene (44) gebildet wird.

11. Sammelschienenblock (10) nach mindestens einem der Ansprüche 1 bis 10,
**dadurch gekennzeichnet,**
**daß** die Enden der Endbereiche (28,30) der mittleren Trennwände (22, 24) einen größeren Abstand zu den Bodenbereichen der Kammern (14,16,18) aufweisen als die Enden der äußeren Trennwände (20,26).

12. Sammelschienenblock (10) nach mindestens einem der Ansprüche 6 bis 11,
**dadurch gekennzeichnet,**
**daß** die Bodenkammer (40) kleiner als die mittlere Kammer (16) ist.

13. Sammelschienenblock (10) nach mindestens einem der Ansprüche 1 bis 12,
**dadurch gekennzeichnet,**
**daß** das Isolierprofil (12) aus extrudiertem Kunststoff besteht.

14. Sammelschienenblock (10) nach mindestens einem der Ansprüche 1 bis 13,
**dadurch gekennzeichnet,**
**daß** die Stirnseiten des Isolierprofils (12) mit Endkappen (54) verschließbar sind.

15. Sammelschienenblock (10) nach mindestens einem der Ansprüche 1 bis 14,
**dadurch gekennzeichnet,**
**daß** die freien Enden der Anschlußlaschen (48,50,52) gabelförmig ausgeklinkt sind.

16. Sammelschienenblock (10) nach mindestens einem der Ansprüche **1** bis **14,**
**dadurch gekennzeichnet, daß** die freien Enden der Anschlußlaschen (48, 50, 52) stiftförmig ausgebildet sind.

## Claims

1. A busbar assembly (10) for the phase-wise connection of common phase switching terminals, having an insulating profile (12) which comprises several U-shaped chambers (14, 16, 18) disposed parallel to one another for the corresponding housing of busbars (42, 44, 46), which comprise connecting lugs (48, 40, 52) for connection to switching terminals, wherein partition walls (20, 22, 24, 26) of the insulating profile (12) are constructed in such a manner that they keep the busbars (42, 44, 46) spaced apart,
**characterised in that** all chambers (14, 16, 18) open in the same direction and end regions (28, 30) of the partition walls (22, 24) forming the middle chamber are constructed inclined towards one another and abut the middle busbar (44) or its connecting lugs (50).

2. A busbar assembly (10) according to Claim 1,
**characterised in that** the end regions (28, 30) are 'constructed inclined to one another and raised in a roof-shape.

3. A busbar assembly (10) according to Claim 1 or 2,
**characterised in that** the chambers (14, 16, 18) are constructed so that the corresponding busbars (42, 44, 46) can be clamped therein.

4. A busbar assembly (10) according to at least one of Claims 1 to 3,
**characterised in that** at least one cam shoulder (32, 34, 36, 38) constructed at a partition wall (22, 24) extends into each of the three chambers (14, 16, 18) for the locking into place of the inserted busbars (42, 44, 46).

5. A busbar assembly (10) according to Claim 4,
**characterised in that** the cam shoulders (32, 38) extending into the two outer chambers (14, 18) are disposed at the inner partition walls (22, 24) forming the middle chamber (16).

6. A busbar assembly (10) according to Claim 4 or 5,
**characterised in that** the lower section of the middle chamber (16) forms a base chamber (40), in which the end pointing to the middle chamber (16) is provided with at least one cam shoulder (34, 36).

7. A busbar assembly (10) according to Claim 6,
**characterised in that** the end of the base chamber (40) pointing to the middle chamber (16) comprises two cam shoulders (34, 36) lying opposite one another.

8. A busbar assembly (10) according to at least one of Claims 4 to 7,
**characterised in that** the busbars (42, 44, 46) are provided with locking projections (54), which engage behind the cam shoulders (32, 34, 36, 38).

9. A busbar assembly (10) according to at least one of Claims 1 to 8,
**characterised in that** the connecting lugs (48, 50, 52) are elbowed in such a manner that they lie in one plane.

10. A busbar assembly (10) according to Claim 9,
**characterised in that** the common plane is formed by the middle busbar (44).

11. A busbar assembly (10) according to at least one of Claims 1 to 10,
**characterised in that** the ends of the end regions (28, 30) of the middle partition walls (22, 24) have a greater distance from the base regions of the chambers (14, 16, 18) than the ends of the outer partition walls (20, 26).

12. A busbar assembly (10) according to at least one of Claims 6 to 11,
**characterised in that** the base chamber (40) is smaller than the middle chamber (16).

13. A busbar assembly (10) according to at least one of Claims 1 to 12,
**characterised in that** the insulating profile (12) is made from extruded plastic.

14. A busbar assembly (10) according to at least one of Claims 1 to 13,
**characterised in that** the end sides of the insulating profile (12) can be sealed with end caps (54).

15. A busbar assembly (10) according to at least one of Claims 1 to 14,
**characterised in that** the free ends of the connecting lugs (48, 50, 52) are notched in a fork shape.

16. A busbar assembly (10) according to at least one of Claims 1 to 14,
**characterised in that** the free ends of the connecting lugs (48, 50, 52) are constructed in a pin shape.

## Revendications

1. Ensemble de barres de distribution (10) pour relier, selon leurs phases, des pôles de commutation de même phase d'appareils de commutation, comprenant un profilé isolant (12) présentant plusieurs chambres parallèles en forme de U (14, 16, 18) servant à accueillir des barres de distribution (42, 44, 46) correspondantes équipées de pattes de raccordement (48, 50, 52) pour les relier à des pôles de commutation, les parois de séparation (20, 22, 24, 26) du profilé (12) étant configurées de manière à maintenir espacées les barres de distribution (42, 44, 46),
**caractérisé en ce que**
toutes les chambres (14, 16, 18) s'ouvrent dans la même direction et les extrémités (28, 30) des parois séparatrices (22, 24) constituant la chambre médiane sont inclinées l'une vers l'autre et en contact avec la barre de distribution (44) médiane ou avec des pattes de raccordement (50) de celle-ci.

2. Ensemble (10) selon la revendication 1,
**caractérisé en ce que**
les extrémités (28, 30) inclinées l'une vers l'autre sont étirées vers le haut en forme de toit.

3. Ensemble (10) selon la revendication 1 ou 2,
**caractérisé en ce que**
les chambres (14, 16, 18) sont configurées de manière à pincer les barres (42, 44, 46) qui s'y trouvent.

4. Ensemble (10) selon au moins une des revendications 1 à 3,
**caractérisé en ce que**
dans chacune des trois chambres (14, 16, 18) fait saillie au moins une barrette en ergot (32, 34, 36, 38) formée sur une paroi séparatrice (22, 24), pour bloquer la barre de distribution (42, 44, 46) engagée dans la chambre.

5. Ensemble (10) selon la revendication 4,
**caractérisé en ce que**
les barrettes en ergot (32, 38) faisant saillie dans les deux chambres externes (14, 18) sont montées sur les parois séparatrices (22, 24) internes, formant la chambre médiane (16).

6. Ensemble (10) selon l'une des revendications 4 ou 5,
**caractérisé en ce que**
la partie inférieure de la chambre médiane (16) forme une chambre de fond (40) dont l'extrémité située vers la chambre médiane (16) porte au moins une barrette en ergot (34, 36).

7. Ensemble (10) selon la revendication 6,
**caractérisé en ce que**
l'extrémité de la chambre de fond (40), située vers la chambre médiane (16), présente deux barrettes en ergot (34, 36) se faisant face.

8. Ensemble (10) selon au moins l'une des revendications 4 à 7,
**caractérise en ce que**
les barres de distribution (42, 44, 46) portent des saillies d'arrêt (54), serrant en prise par derrière avec les barrettes en ergot (32, 34, 36, 38).

9. Ensemble (10) selon au moins l'une des revendications 1 à 8,
**caractérisé en ce que**
les pattes de raccordement (48, 50, 52) sont recourbées de manière à se trouver dans un même plan.

10. Ensemble (10) selon la revendication 9,
**caractérisé en ce que**
le plan commun est celui de la barre médiane (44).

11. Ensemble (10) selon au moins l'une des revendications 1 à 10,
**caractérisé en ce que**
les bouts des extrémités (28, 30) des parois séparatrices médianes (22, 24) sont plus éloignés des zones de fond des chambres (14, 16, 18) que les extrémités des parois séparatrices externes (20, 26).

12. Ensemble (10) selon au moins l'une des revendications 6 à 11,
**caractérisé en ce que**
la chambre de fond (40) est plus petite que la chambre médiane (16).

13. Ensemble (10) selon au moins l'une des revendications 1 à 12,
**caractérisé en ce que**
le profilé isolant (12) est en matière plastique extrudée.

14. Ensemble (10) selon au moins l'une des revendications 1 à 13,
**caractérisé en ce que**
les faces frontales du profilé isolant (12) peuvent être obturées par des capots d'extrémité (54).

15. Ensemble (10) selon au moins l'une des revendications 1 à 14,
**caractérisé en ce que**
les extrémités libres des pattes de raccordement (48, 50, 52) sont encochées en forme de fourches.

16. Ensemble (10) selon au moins l'une des revendications 1 à 14,
**caractérisé en ce que**
les extrémités libres des pattes de raccordement (48, 50, 52) sont en forme de broches.
